## Europäisches Patentamt
## European Patent Office
## Office européen des brevets

(11) Publication number: **0 194 249**
A2

# (12) EUROPEAN PATENT APPLICATION

(21) Application number: 86870028.7

(22) Date of filing: 05.03.86

(51) Int. Cl.⁴: **G 05 D 23/19**, G 05 F 1/45, H 05 B 1/02, B 29 C 65/00

(30) Priority: 06.03.85 BE 404460

(43) Date of publication of application: 10.09.86 Bulletin 86/37

(84) Designated Contracting States: **AT CH DE FR GB IT LI LU NL SE**

(71) Applicant: **TECHNION, Burg. Daneelsstraat 40, B-8500 Kortrijk (BE)**

(72) Inventor: **Vanwormhoudt, Marc C., Veurestraat 50, B-9821 Gent (BE)**

(74) Representative: **Vanderperre, Robert et al, Bureau VANDER HAEGHEN 63 Avenue de la Toison d'Or, B-1060 Bruxelles (BE)**

(54) Method of controlling the heating power developed in a heating element and apparatus using same.

(57) A controlled number of complete half cycle of electric current is coupled to the resistive heating element, said controlled number of half cycles being a fraction (k) of the total number of half cycles of the supply current, and said half cycles that are coupled to the resistive heating element being substantially evenly spaced apart in time and said fraction (k) of half cycles is adjusted so that its value converges quickly and accurately on a set value (z). The set value is regulated by comparing the measured value of the feed voltage or current with the required value, determining the deviation between these values and varying the set value (z) depending on the value of said deviation until the deviation is subtantially zero.

FIG.1

ACTORUM AG

0194249

The present application relates to a new method for controlling the heating power developed in a resistive heating element for producing a desired heating energy to be used for instance to weld pipes made of thermoplastic material to one another by means of an electrofitting and it relates also to a welding control apparatus that is based on this method.

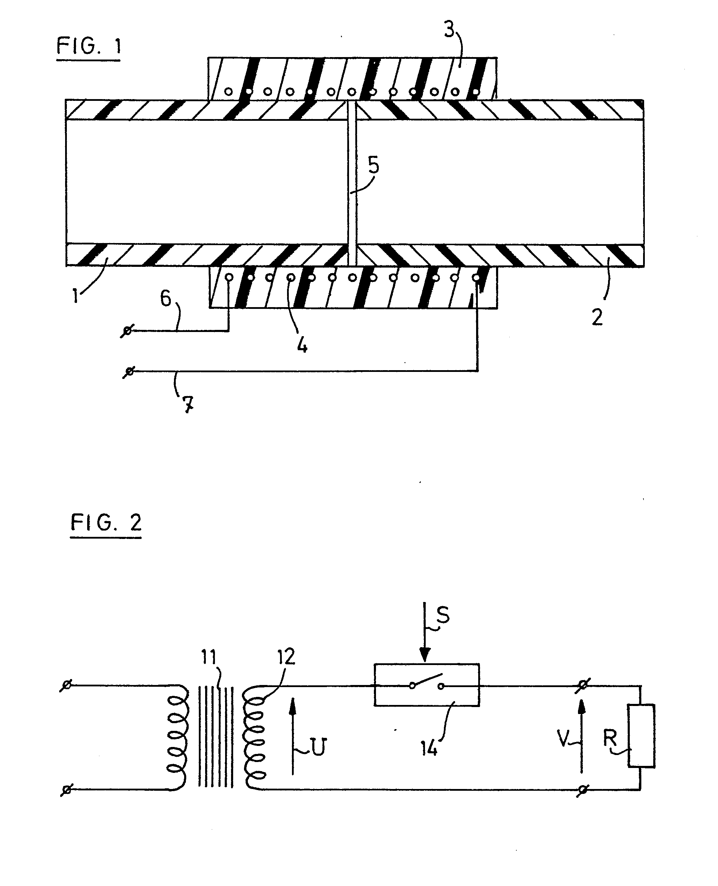

Welding pipes in an end-to-end relationship using an electrofitting is achieved as follows. The electrofitting is first slit onto the end of one pipe and then the end of the second pipe is introduced into the electrofitting such that the ends of the two pipes are in front of one another and such that the fitting extends symmetrically with respect to the joint or seam to be performed as shown in Fig. 1 of the appended drawings. The fitting is usually made of the same thermoplastic material as the two pipes to be welded to one another and it comprises a resistive heating element embedded therein. When the fitting is correctly placed, it is resistively heated by electric current flowing through the heating element so as to cause some of the thermoplastic material of the pipes and the fitting to melt. After cooling, this material regains its solid state and insures a good, gastight and strong junction of the two pipes.

0194249

Electrofittings are already in use since many years. In the early years, each manufacturer provided its own welding box for welding its fittings. Such a welding box could not be used for welding fittings of another manufacturer. The reasons why this was so may be summarized as follows :

- The resistance of the different fittings vary widely from one manufacturer to another, and even from one fitting to the other (0.3 to 60 Ohms resistance).

- The power to be delivered to the different fittings varies over a wide range (25 to 2500 Watts).

- Some manufacturers require their fittings to be welded at constant current, others at constant voltage. Further, the voltages and currents to be used are very different from one manufacturer to another.

- Some of the resistive coils have a substantial temperature coefficient (0.4 %/degree centigrade), others have nearly a zero temperature coefficient.

- The welding times for the different fittings differ widely and the recommended corrections of the welding time for varying ambient temperature, are very dissimilar.

The situation therefore was such that one user could not use fittings from different manufacturers, without being equipped with a separate welding box for each series of fittings from a different manufacturer.

In most cases the welding box provided no regulation at all, or provided regulation using phase angle control of semiconductor controlled rectifiers.

In the early 1980's, a welding apparatus was developed and brought on the market that could use the electrofitting of most manufacturers. Changing from one fitting to another required however up to six quantitative adjustments to be made to the equipment, the settings having to be read out from printed parameter tables. Moreover, the settings depended upon the ambient temperature. This procedure was therefore very prone to error. In this universal welding box, power control was still realized by phase angle control of semiconductor controlled rectifiers.

A first object of this invention is providing a new method of controlling the heating power delivered to a welding electrofitting, which overcomes the disadvantages of the prior art methods.

A second object of the invention is providing a universal welding control unit which implements the control method of the invention.

According to a first aspect of the invention there is thus provided a method wherein a controlled number of complete half cycles of the alternating feed electric current is coupled to the resistive heating element, said controlled number of complete half cycles being a fraction (k) of the total number of half cycles of the current, and said half cycles that are coupled to the

4

0194249

resistive heating element being substantially evenly spaced apart in time.

The fraction of half cycles which are coupled to the resistive heating element is adjusted so that its value converges quickly and accurately on a set value and said set value is regulated by comparing the measured value of the feed voltage or current with the desired value, determining the deviation between these values and varying the set value depending on the value of said deviation until the deviation is substantially zero. Provision is made for assuring that any two successive half cycles of the feed current coupled to the heating element are always of opposite polarities.

The advantages of the method in accordance with this invention are that the heating power delivered to the load can be controlled in a very precise though flexible way while permitting a higher amount of current to be coupled to the load without the penalty of the electronic circuitry being overheated.

In accordance with a second aspect of this invention there is provided a universal welding control unit comprising a controlled zero-crossing switch serially connected with the resistive heating element and a controller arranged to produce control signals for the zero-crossing switch, said control signals serving to drive the zero-crossing switch to conduct thereby to couple a controlled number of complete half cycles of the supply voltage to the heating element, said controller being arranged to produce a control signal concurrently with the supply voltage crossing the zero value at suitable times. The controller is further arranged to prevent that any half cycle coupled to the heating element is followed by another half cycle of the same polarity.

The invention is described in further details hereinafter with reference to the appended drawings in which:

Fig. 1 depicts a welding electrofitting to which there is applied the control method in accordance with the invention,

Fig. 2 is a schematic diagram of the power circuit used in implementing the method according to the invention,

Fig. 3 shows exemplary signal waveforms illustrating the operation of the control system of the invention,

Fig. 4 is a circuit diagram of an exemplary embodiment of a universal welding control unit according to a second aspect of the invention.

Referring first to Fig. 1, there is shown a cross-sectional view of two pipes 1 and 2 positioned in an electrofitting 3 such that the fitting is extending about the end portions of the pipes symmetrically with respect to the junction 5 of said pipes. The electrofitting 3 comprises a resistive heating element 4 embedded therein and said heating element 4 is connectable to a welding control unit by means of lines 6 and 7, said welding control unit (to be described later herein) serving to feed the heating element 4 with a controlled electric current for heating the electrofitting 3 to thereby melt some material of the fitting 3 and the ends of the pipes 1 and 2 with a view to weld said pipes to one another in an end-to-end relationship.

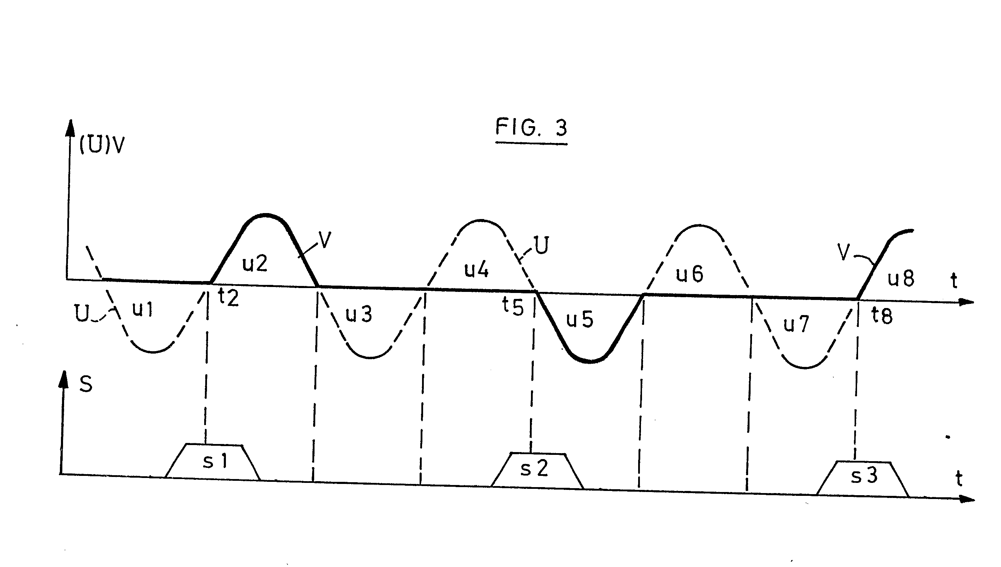

In accordance with this invention, the welding control unit is arranged for controlling the heating power delivered by the heating element by automatically timing the coupling of a suitable ratio of half cycles of the feed current to the heating element as evenly as possible depending on the type of fitting and the manufacturer thereof. The welding control unit of the invention comprises substantially a power circuit operating under control of a logic controller. The power circuit is schematically represented in Fig. 2. It is supplied from an A.C. power source through the feed transformer 11 having a secondary winding 12 to be connected to the heating element 4 of an electrofitting 3 (Fig. 1) through a serially connected controlled switch 14, the function of which is to control the heating power delivered into the electrofitting in response to the spaced apart control signals S from the controller 20. The switch 14 is comprised of a zero-crossing semiconductor switch, that is a switch which is set in conducting state when the supply voltage is crossing the zero value and which is set in non-conducting state when the supply current is crossing the zero value.

In Figure 2 the heating element 4 in the fitting or load is represented by the resistance R, the letter V represents the rms feed voltage across the load, the letter U represents the rms supply voltage across the secondary winding of tranformer 11 and the letter S represents the digital control signal for the semiconductor switch 14.

The operation of the control system in accordance with the invention is described hereafter with reference to Fig. 3 which shows a signal waveform for the voltage and an exemplary sequence of control signals $S_1$, $S_2$, $S_3$. Because the control switch 14 is a zero-crossing switch, it always conducts a complete half cycle (positive or negative) when it is driven by a control signal. The successive voltage half cycles being denoted $u_1$, $u_2$, $u_3$ ..., it is apparent that the half cycles $u_2$, $u_5$, $u_8$ are coupled to the load. The voltage signal thus applied to the load is represented in full line. The half cycles shown in dash line are those which are blocked. In the exemplary representation of Fig. 3, one third of the voltage half cycles are coupled to the load and the remaining two thirds of the half cycles are blocked.

Assuming the ratio of the number of half cycles coupled to the load to the total number of half cycles of the voltage U is denoted by $\underline{k}$, the heating power is given by the relations :

$$P = k\ U^2/R$$

and

$$V = \sqrt{k}.U$$

By controlling the ratio $\underline{k}$, any value smaller than U for the rms heating voltage can thus be obtained easily.

0194249

The advantages of such ratio control are :

1. Any feed voltage value between zero and Urms can be obtained.

2. In contrast with the phase angle control, the control timing must not be very accurate. One must only guarantee that the control voltage is ON or OFF a short time before a zero crossing occurs, and that it lasts until a short time after the zero crossing has occurred.

3. The control voltage is a digital signal.

4. In contrast with phase angle control, the waveforms produced in the power control circuit have no fast, almost discontinuous transitions. This prevents many problems associated with interfering noise induced in the peripheral electronic circuitry and the consequent operational hazards and faults.

5. The electronic switch is used in most favourable thermal conditions. This is due to the fact that the voltage drop across the electronic switch is nearly constant, irrespective of the current through the switch. This favours the current flowing with peaks of high value. If Imax denotes the maximum current the switch can sustain without being overheated for k=1 (that is for continuous conduction), the rms current through the switch for a given ratio $\underline{k}$ is

$$Irms = Imax \ / \ \sqrt{k}$$

With k=0.25, the method of the invention allows the control switch to conduct the double amount of current without being overheated as compared with a conventional continuously conducting switch (k = 1).

6. Implementing a proper control strategy as explained hereafter, assures that an applied half cycle will never be followed by another applied half cycle of the same polarity. This advantageously prevents saturation of the welding transformer core.

Setting the control ratio $\underline{k}$ at a given value $\underline{z}$ is performed by the controller 20. This is arranged to compute during each half cycle the value of a quantity which represents the deviation of the actual percentage of coupled half cycles with respect to the set percentage. Said quantity is called hereinafter balance. Each time a half cycle is coupled to the load, the balance is increased by (1-z) and each time a half cycle is blocked, the balance is decreased by $\underline{z}$. The controller 20 is organized such that when the balance is positive during any half cycle, it commands the following half cycle to be blocked and when the balance is negative, the following half cycle is allowed to be coupled to the load, whereby the actual value for the ratio $\underline{k}$ is altered. It follows that the balance always remains as close to zero as possible. If N denotes the total number of half cycles of the supply current and A denotes the number of half cycles that are coupled to the load, the balance B is given by the relation :

$$\mid B \mid \ = \ \mid (1 - z)A - z(N - A) \mid \ < 1$$

with $\qquad$ $k = A / N = z \pm e,$ and $\quad |e| < 1/N$

The deviation $e$ of the actual ratio $k$ from the desired value $z$ decreases as the total number of half cycles is increasing with time. After one second of time, the deviation $e$ is already smaller than 0.01.

The deviation $e$ is used in a sampled regulation feedback loop arranged to regulate either the rms load voltage or the rms load current. During each sampling interval, the rms value of the voltage or current to be regulated is measured and compared to the required value. The set value $z$ is increased or decreased depending on the sign of the deviation $e$ such that the ratio $k$ is increased or decreased accordingly by operation of the control mechanism as explained in the foregoing. The error is roughly halved at each sampling so that a value very close to the required value is reached after about two or three seconds.

In order to make sure that consecutively applied half cycles are of opposite polarities, the controller keeps track of the polarities of the half cycles that are coupled to the load. If at any time it determines that a half cycle of the wrong polarity would have to be coupled to the load, it will cause this half cycle to be blocked in spite of the balance being already negative. The balance is being then still more negative as a result of further decrease by $z$ and the next half cycle(s) will then be coupled to the load.

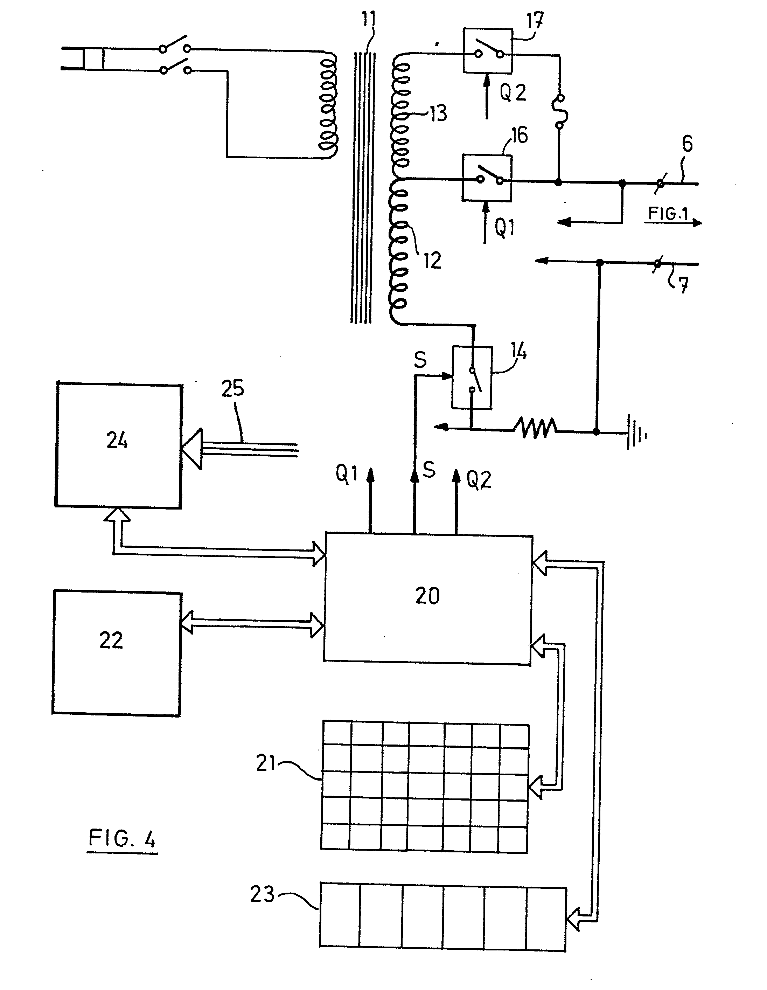

Referring to Fig. 4, there is schematically shown an exemplary embodiment of a welding control unit implementing the control process according to the invention. The reference numeral 11 denotes the supply transformer with its secondary winding 12 arranged to be connected to the heating element 4 of a fitting 3 (Fig. 1) through the controlled zero-crossing switch 14 as schematically represented in Fig. 2. In the embodiment of Fig. 4 the transformer 11 is provided with an additional secondary winding 13 for economical purposes. One secondary winding is intended for feeding high voltage/low current fittings and the other secondary winding is intended for low voltage/high current fittings. Selecting the appropriate winding is made by actuation of one of the switches 16 and 17.

The control signals Si for the controlled switch 14 and the actuating signals $Q_1$ and $Q_2$ for the switches 16 and 17 are produced by the controller or microprocessor 20 which is connected and organized to produce said control signals Si taking account of the type of fitting which is keyed in by means of a keyboard 21. A memory 22 is arranged to store the various operating parameters corresponding to each type of fitting, e.g. the electric resistance, the resistance temperature coefficient, the welding mode (voltage or current), the welding time, the temperature coefficient of the welding time, and the nominal value of the control ratio $z$. A display 23 is provided to visualize a desired number of data, e.g. the type of fitting, the welding time, diagnostic messages.

A signal conditioner 24 is provided to enter a number of parameters for monitoring by the controller 20. These parameters include e.g. the ambient temperature, the transformer temperature, the resistance of the electrofitting, the mains supply voltage, the feed voltage across the heating element, the feed current, the resistance measurement current source. The parameters are accepted into the conditioner 24 through input lines represented generally by the arrow labelled 25.

When a fitting is connected across the terminals of the power circuit 10 and when its type is keyed in, the microprocessor 20 operates to accept the actual resistance value of the fitting as measured and to compare same to the nominal value as stored in the memory file 22, taking the ambient temperature into account. When the measurement is out of limits, the microprocessor refuses the fitting by failing to produce the control signals Si. The microprocessor also accepts the signals representing the supply voltage and frequency and checks for the temperature of the feed transformer 11 not being too high. If the check is satisfactory, the processor 20 reads out the welding time from the memory file 22 and enables the switch 14, thereby allowing the control process as outlined hereinbefore to be carried out for delivering the correct welding voltage or current to the electrofitting heating element. The whole welding operation is thereby achieved automatically and continuously with a high accuracy of control, while a continuous monitoring is performed by the microprocessor.

0194249

CLAIMS

1. A method of controlling the heating power developed in a resistive heating element, characterized in that a controlled number of complete half cycles of electric current is coupled to the resistive heating element, said controlled number of half cycles being a fraction (k) of the total number of half cycles of the supply current, and said half cycles that are coupled to the resistive heating element being substantially evenly spaced apart in time.

2. A method according to claim 1, characterized in that the said fraction (k) of half cycles which are coupled to the resistive heating element is adjusted so that its value converges quickly and accurately on a set value (z).

3. A method according to claim 2, characterized in that said set value (z) for the half cycles coupled to the resistive heating element is regulated by comparing the measured value of the feed voltage or current with the required value, determining the deviation between these values and varying the set value (z) depending on the value of said deviation until the deviation is substantially zero.

4. A method according to claim 1, characterized in that any two successive half cycles of the feed current coupled to the resistive heating element are always of opposite polarities.

5.    A method according to claim 1,  characterized in that the feed current is coupled to the resistive heating element through a zero-crossing switch (14) in response to control signals (S1,  S2,  S3 ...),  said control signals being present concurrently with the supply voltage (U) crossing the zero value at suitable times (t2,  t5, t8 ...),  each of said control signals being applied from a first time shortly in advance of a respective zero-crossing of the supply voltage to a second time shortly behind said zero-crossing.

6.    An apparatus for controlling the heating power delivered to a welding electrofitting comprising a resistive heating element to be fed with an alternating electric current, characterized in that it comprises a controlled zero-crossing switch (14) serially connected with the said resistive element (4), the controlled zero-crossing switch being responsive to control signals (S1,  S2,  S3 ...) for coupling the electric current to the resistive element,  a controller (20) arranged to produce said control signals (S1,  S2,  S3 ...) for the controlled zero-crossing switch (14) in response to operating signals including a voltage monitoring signal which represents the present value and frequency of the supply voltage (U), said controller being arranged to produce a control signal concurrently with the supply voltage crossing the zero value at suitable times (t2,  t5,  t8 ...) whereby a controlled number of complete half cycles of the supply voltage are coupled to the said resistive heating element,  said half cycles that are coupled to the resistive heating element being substantially evenly spaced apart in time.

7. An apparatus according to claim 6, characterized in that the controller (20) is arranged to produce each of said control signals (S1, S2, S3 ...) from a first time shortly in advance of a respective zero crossing of the supply voltage to a second time shortly behind said zero-crossing.

8. An apparatus according to claim 6, characterized in that the controller (20) is arranged to adjust the fraction (k) of the number of coupled half cycles with respect to the total number of half cycles of the supply voltage such that the value of said fraction (k) converges quickly and accurately on a set value (z).

9. An apparatus according to claim 6, characterized in that the controller (20) is further arranged to regulate the set value (z) by comparing the measured value of the feed voltage (V) or current with the desired value, determining the deviation between these values and varying the set value (z) depending on the value of said deviation until the deviation is substantially zero.

10. An apparatus according to claim 6, characterized in that the controller (20) is arranged to make sure that any two successive half cycles of the feed current coupled to the resistive heating element are always of opposite polarities.

1/3

FIG. 1

FIG. 2

FIG. 3

FIG. 4